Europäisches Patentamt

European Patent Office

Office européen des brevets

(11) Numéro de publication: **0 376 773 B1**

## (12) FASCICULE DE BREVET EUROPEEN

(45) Date de publication de fascicule du brevet: **18.05.94** (51) Int. Cl.⁵: **B29C 65/34**

(21) Numéro de dépôt: **89403330.7**

(22) Date de dépôt: **30.11.89**

(54) **Dispositif pour détecter, au cours du soudage, des variations dans l'état physique de la matière plastique d'une pièce de raccordement prévue pour la jonction de tubes.**

(30) Priorité: **29.12.88 FR 8817420**

(43) Date de publication de la demande:
**04.07.90 Bulletin 90/27**

(45) Mention de la délivrance du brevet:
**18.05.94 Bulletin 94/20**

(84) Etats contractants désignés:
**AT BE CH DE ES GB GR IT LI LU NL SE**

(56) Documents cités:
**EP-A- 0 149 410**
**EP-A- 0 173 174**
**EP-A- 0 221 396**
**EP-A- 0 257 283**

(73) Titulaire: **GAZ DE FRANCE (SERVICE NATIO-NAL)**
**23 rue Philibert-Delorme**
**F-75017 Paris(FR)**

(72) Inventeur: **Nussbaum, Max**
**11, rue Louis Blanc**
**F-95600 Eaubonne(FR)**
Inventeur: **Federspiel, Eric**
**04, place Charles de Gaulle**
**F-95210 Saint Gratien(FR)**

(74) Mandataire: **Lerner, François et al**
**5, rue Jules Lefèbvre**
**F-75009 Paris (FR)**

## Description

L'invention a pour objet un dispositif destiné à détecter, au cours de son chauffage, des variations dans l'état physique de la matière plastique thermosoudable d'une pièce de raccordement prévue pour être soudée avec une autre pièce de même matière en forme de tube à section circulaire ou sensiblement circulaire.

Pour de nombreux emplois, et en particulier pour l'établissement de réseaux de distribution de gaz, on utilise aujourd'hui de plus en plus fréquemment des tubes en matière plastique et particulièrement en polyéthylène.

L'assemblage de ces tubes ne pouvant en pratique se faire de façon satisfaisante par coilage, on est donc amené à les souder et plus précisément à les thermosouder.

Pour ce faire, on a généralement recours à une pièce de raccordement qui peut notamment consister en un manchon servant à relier l'une des extrémités de deux tubes, ou encore, par exemple, en une prise de branchement ayant localement la forme d'une selle et permettant le raccordement transversal des tubes. Quelle que soit la pièce de raccordement choisie, celle-ci comporte de façon habituelle, dans son épaisseur, une résistant électrique de chauffage disposée à proximité de sa surface qui doit venir en contact de celle du tube. L opération de soudage est réalisée en raccordant la résistance à une source électrique(telle qu'une source de courant alternatif redressé) qui, par effet Joule, va échauffer la résistance et provoquer le ramollissement avec fusion de la matière plastique environnante, réalisant ainsi le soudage.

Pour avantageuse qu'elle soit, une telle technique d'assemblage présente cependant une difficulté, à savoir le contrôle du temps de chauffage de la résistance nécessaire à l'obtention d'une soudure de bonne qualité et donc à la formation d'un bloc unitaire entre le(les) tube(s) et la pièce de raccordement.

On sait aujourd'hui qu'un tel contrôle peut être effectue de façon satisfaisante essentiellement par le suivi de deux grandeurs physiques : la température et le volume de la matière constitutive des pièces à souder.

Pour réaliser le contrôle actif de ces paramètres, il a été proposé de ménager dans l'une des pièces à assembler au moins une cavité au sein de laquelle la matière ramollie est susceptible de pénétrer, cette cavité s'étendant, selon un axe sensiblement radial au(x) tube(s), jusqu'au voisinage d'une partie de la résistance en se terminant par une paroi de fond. A cette cavité est adjoint un capteur propre à capter, au sein de cette dernière, des variations dans l'état physique de la matière, ce capteur étant en général associé à des moyens propres à commander la coupure de l'alimentation en énergie électrique de la résistance de chauffage.

Différents types de capteurs ont d'ailleurs déjà été envisagés, tels par exemple qu'une thermosonde, un micro-interrupteur sensible à la pression de la matière ramollie au sein de la cavité, ou encore un capteur sensible à la dureté ou à la consistance de cette même matière.

De tels capteurs et d'autres sont notamments décrits dans la demande de brevet français FR-A-2555936 et ses certificats d'additions FR-A- 2572327 et FR-A-2600008, ou encore dans la demande EP-A-0149410 qui décrit un dispositif comprenant :

- une pièce de raccordement prévue pour être soudée autour d'au moins une autre pièce tubulaire en matière plastique thermofusible, lesdites pièces présentant des surfaces respectivement intérieure et extérieure par lesquelles elles sont mutuellement reliées au cours du soudage, au moins une cavité au sein de laquelle la matière ramollie est susceptible de pénétrer étant ménagée dans ladite pièce de raccordement, cette cavité s'étendant suivant un axe sensiblement radial à la pièce tubulaire et à ladite pièce de raccordement, en se terminant par une paroi de fond adjacente à ladite surface intérieure de la pièce de raccordement,
- une résistance électrique de chauffage noyée dans la pièce de raccordement entre sadite surface intérieure et ladite cavité, à une distance radiale minimum donnée ($h_1$) de ladite paroi de fond de la cavité, ladite résistance étant connectable à une source électrique pour faire fondre ladite matière thermofusible sur une épaisseur radiale prédéterminée de matière fondue en vue du soudage entre elles desdites pièces,
- et au moins un capteur disposé dans ladite cavité pour y capter des variations d'état physique de la matière.

Malgré cela, certains problèmes restent encore posés et la qualité de soudage des pièces n'est pas toujours satisfaisante.

En particulier, différents essais ont montré que pour des jeux d'assemblage réduits entre les pièces, le temps de soudage a tendance à diminuer alors que les jeux augmentent, ce qui comme on le comprend, nuit sérieusement à la qualité de la soudure.

2

Or, dans la pratique, les jeux d'assemblage peuvent varier de façon importante suivant les pièces utilisées.

De plus, les techniques actuelles de soudage ne permettent pas d'obtenir dans de bonnes conditions que l'épaisseur de matière fondue au cours du chauffage augmente avec la taille des pièces à assembler ce qui est en pratique nécessaire.

L'invention a pour objet de résoudre ces différents problèmes en définissant des conditions de forme, de dimension et de position des cavités dans lesquelles la matière ramollie pénètre au cours du chauffage et au niveau desquelles les capteurs relèvent les variations de son état physique.

Pour cela, l'invention se caractérise tout d'abord en ce que la distance radiale minimum précitée $h_1$ et le dimensionnement $d$ en section, suivant un plan sensiblement perpendiculaire à son axe, de la cavité de la pièce de raccordement à proximité de sa paroi de fond, sont chacun sélectionnés pour être inférieurs ou égaux à l'épaisseur radiale prédéterminée de matière fondue $e$ mesurée depuis ladite résistance vers la surface extérieure de ladite pièce de raccordement.

Avantageusement, l'invention prévoit par surcroît que la distance radiale $h_1$ ait une valeur sensiblement égale à celle de l'épaisseur radiale prédéterminée de matière qui fond lors du chauffage desdites pièces avant qu'une pression de dilatation induite par le chauffage provoque la pénétration de ladite matière fondue dans la cavité, sur une épaisseur radiale $e - h_1$.

Ainsi, on pourra assurer le ramolissement avec fusion du fond de la cavité avant que la pression de la matière fondue par la résistance soit suffisante pour "le rompre", tout en évitant qu'une pénétration prématurée de matière fondue dans la cavité conduise le capteur à commander l'interruption de l'alimentation en énergie électrique de la résistance avant que la cohésion des pièces, au niveau de leur interface de soudage, soit suffisante pour assurer, après refroidissement, une soudure de bonne qualité.

On notera dès à présent que l'expression "partie de la résistance qui est la plus proche de la paroi de fond de la cavité" doit s'interpréter comme définissant la zone de la résistance qui est située au plus près de la paroi de fond de cette cavité et sensiblement en regard de celle-ci.

Selon une autre caractéristique de l'invention, la cavité en question s'élargira au-delà de sa paroi de fond en présentant localement un épaulement tel que la distance qui sépare cet épaulement de la partie de la résistance la plus proche de cette paroi de fond soit inférieure ou égale au double de l'épaisseur de matière constitutive de la pièce où est ménagée la cavité et qui s'est ramollie au cours du chauffage.

Ainsi, la plupart des capteurs existant actuellement pourront- ils être disposés dans la cavité avec des conditions optimales de mise en place, permettant un contrôle tout à fait rigoureux du temps de chauffage.

Même si l'invention peut être appliquée pour assurer l'assemblage de différents types de raccordement et de différentes pièces tubulaires, il reste malgré tout qu'actuellement, dans la pratique, un grand nombre d'interventions consistent en le soudage de deux tubes mis bout à bout et enfilés, à l'une de leurs extrémités, à l'intérieur d'un manchon de raccordement pourvu d'un orifice de réception à section circulaire.

Les conditions de mise en oeuvre qu'imposent alors l'invention sont les suivantes :

$$0 \leq d \leq (0{,}03 \cdot \varnothing) + 8 \text{ et}$$
$$0 \leq h_1 \leq (0{,}03 \cdot \varnothing) + 8$$

avec d : diamètre exprimé en mm de la cavité précitée à proximité de sa paroi de fond,

$h_1$ : distance exprimée en mm entre la paroi de fond de cette même cavité et la partie la plus voisine de la résistance de chauffage

$\varnothing$ : diamètre exprimé en mm de l'orifice du manchon.

L'invention, ses caractéristiques et avantages apparaîtront plus clairement de la description qui va suivre faite en référence aux dessins annexés dans lesquels :
- la figure 1 est une vue en coupe longitudinale de deux tubes disposés coaxialement, prêts à être réunis par l'intermédiaire d'un manchon de raccordement électrosoudable,
- la figure 2 est une vue agrandie du détail repéré II à la figure 1,
- et les figures 3 et 4 sont deux variantes possibles de réalisation de la cavité illustrée figure 2.

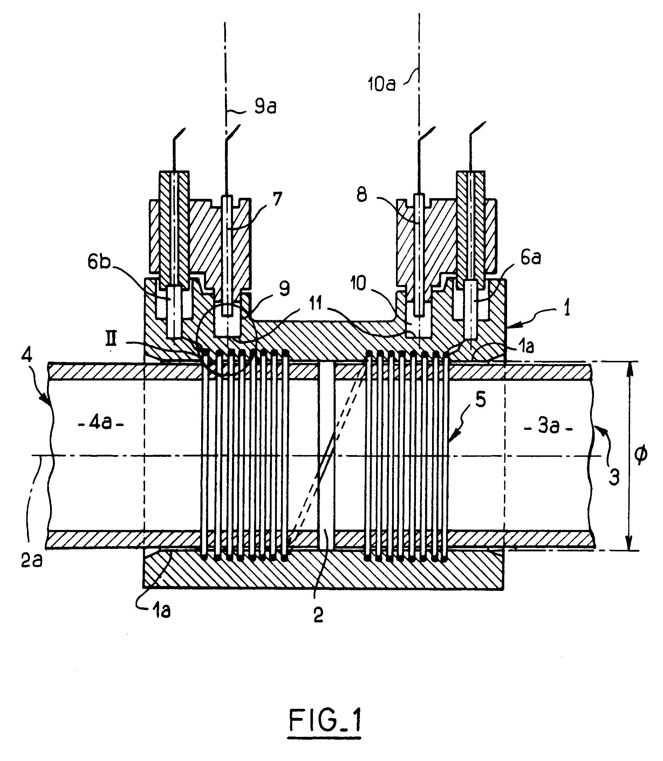

Si l'on se reporte tout d'abord à la figure 1, on voit illustrer une pièce de raccordement en matière plastique thermofusible, telle que du polyéthylène, cette pièce formant manchon dans l'orifice 2 duquel viennent s'engager les extrémités, respectivement 3a, 4a de deux tubes 3, 4 cylindriques circulaires également en matière plastique thermofusible. Les tubes 3 et 4 sont disposés coaxialement, sensiblement dans l'axe 2a de l'orifice du manchon et ont un diamètre extérieur légèrement inférieur au diamètre $\varnothing$ de l'orifice 2, de sorte que le manchon et les tubes présentent des surfaces correspondantes en vis-à-vis par lesquelles ils vont pouvoir être mutuellement reliés au cours du soudage.

Pour la réunion des tubes, le manchon 1 comporte une résistnce électrique de chauffage 5 noyée dans son épaisseur, à proximité immédiate de sa surface intérieure repérée 1a.

La résistance 5 est reliée par ses bornes 6a, 6b à une source d'énergie électrique (non représentée) propre à assurer une élévation suffisante de la température de la résistance pour induire le soudage des pièces entre elles.

En l'espèce, la résistance 5 est constituée par un bobinage électrique cylindrique à section circulaire d'axe parallèle à celui du manchon et relié à la source électrique sus-mentionnée.

Mais on aurait pu également envisager de noyer dans l'épaisseur du manchon une couche de matière présentant des qualités de conductivité électrique et de chauffage comparables à celles du bobinage.

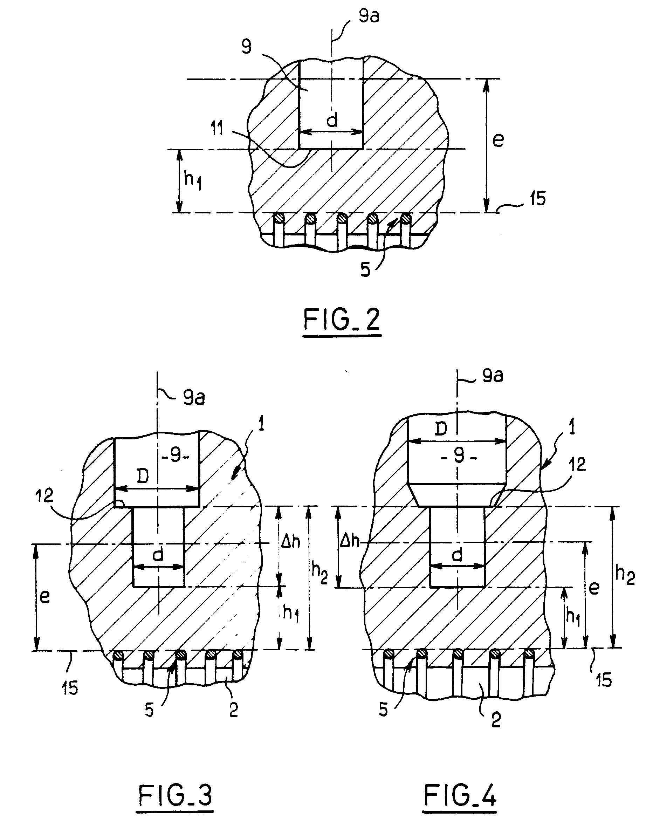

Pour le contrôle du soudage, la pièce de raccordement 1 est encore équipée de deux capteurs 7, 8 disposés dans des cavités 9, 10 dirigées chacune selon un axe 9a, 10a sensiblement radial à celui 2a des tubes, ces cavités s'étendant jusqu'au voisinage de la partie du bobinage en regard la plus voisine, en se terminant à un même niveau par une paroi de fond 11 que l'on distingue plus nettement sur les figures 2 à 4 (où l'on a représenté par souci de clarté des cavités sans capteur).

Les capteurs 7, 8, en soi connus, peuvent par exemple consister en des micro-interrupteurs.

Sur les dispositifs connus de ce type le processus de soudage des pièces est habituellement tel qu'une fois obtenu un chauffage suffisant de la résistance, la matière plastique qui l'environne entre en fusion et se dilate, induisant sous effet de cette pression de dilatation, une pénétration de matière ramollie dans le fond des cavités 9 et 10 puis, cette dilation se poursuivant, une remontée de matière dans les cavités jusqu'à ce que cette matière vienne exercer sur les capteurs 7 et 8 une action tendant à provoquer une interruption dans l'alimentation en énergie électrique de la résistance de chauffage, interrompant de ce fait le chauffage des pièces qu'on laisse alors refroidir.

L'inconvénient d'un tel processus est que la pénétration de la matière ramollie ou fondue dans le fond de la cavité est induite sous l'action de la pression de dilatation de la matière, ce qui risque de conduire à un déclenchement trop rapide des capteurs et donc à une durée de chauffage des pièces insuffisante. Différentes mesures expérimentales ont en effet indiqué pour des jeux relativement faibles entre le diamètre intérieur du manchon (orifice 2) et le diamètre extérieur des tubes 3, 4, le temps de chauffage des pièces était insuffisant, la pression de dilation de la matière créant une remontée trop rapide de matière vers les capteurs.

Pour éviter cet inconvénient, l'invention prévoit donc tout d'abord de disposer le fond 11 des cavités à une distance telle de la partie de la résistance de chauffage la plus proche que le fond 11 en question soit fondu sous l'effet du chauffage avant que la pression de dilatation soit suffisante pour pousser la matière fondue dans les cavités.

Pour ce faire, il est nécessaire que $h_1$ soit inférieur ou égal à $e$ avec :

$h_1$ : distance moyenne entre le fond 11 de chaque cavité et le plan général 15 tangent au bobinage et dans lequel s'étend la partie de la résistance qui est la plus voisine dudit fond, et

$e$ : épaisseur de matière plastique constitutive du manchon 1 qui fond lors du chauffage des pièces.

En l'espèce, sur les figures 2 à 4, cette épaisseur $e$ correspond à l'épaisseur de matière située, par rapport à l'axe du manchon, au-delà, ou à l'extérieur, du plan 15.

Pour éviter par ailleurs qu'un écoulement trop rapide de matière ramollie dans la cavité conduise malgré tout à un arrêt prématuré du chauffage, l'invention prévoit en outre de contrôler la vitesse d'écoulement de la matière par une conformation rigoureuse des cavités de telle sorte que leur dimensionnement en section soit, au moins à proximité de leur fond et suivant un plan sensiblement perpendiculaire à leur axe (tel que 9a sur la figure 2), inférieur ou égal à l'épaisseur $e$ précitée de matière ramollie.

Ainsi, on va pouvoir assurer, quel que soit le jeu d'assemblage des pièces entre elles, tant une fusion du fond 11 des cavités avant que la pression de la matière ramollie soit suffisante pour le rompre, qu'un contrôle de la vitesse d'écoulement de cette même matière permettant de ne déclencher les capteurs 7 et 8 qu'à l'issue d'une durée de chauffage de la résistance 5 suffisante pour assurer, après refroidissement, une soudure de bonne qualité.

Actuellement, la plupart, sinon la totalité, des capteurs 7, 8, existants sont installés à l'intérieur des cavités.

Il pourra donc être utile dans certains cas, suivant la taille des capteurs utilisés, de disposer de cavités offrant un volume intérieur de réception relativement important.

Aussi a-t-'on prévu la possibilité, telle qu'illustrée aux figures 3 et 4, de conformer ces cavités de telle sorte qu'elles élargissent comme on s'éloigne de leur paroi de fond 11, en présentant localement un épaulement périphérique 12.

En pratique, ce brusque élargissement de section sera situé à une distance $h_2$ du plan général 15 défini ci-dessus telle que $h_2 \leqq 2e$, (e étant toujours l'épaisseur précitée de matière fondue).

De cette façon, on disposera d'une hauteur de col $\Delta h = h_2 - h_1$ suffisante pour contrôler de manière efficace la remontée de matière dans chaque cavité, les cols en question respectant bien entendu les caractéristiques précitées en ce qui concerne leur dimensionnement en section. Par contre, leur forme en coupe transversale pourra varier.

Figure 3, on a par exemple illustrée une cavité se présentant sous l'aspect de deux cylindres accolés à section circulaire ayant successivement, en partant du fond 11, un diamètre d puis un diamètre D avec D > d.

Dans ce cas, et en supposant que l'on utilise un manchon comportant un orifice 2 à section circulaire de diamètre ∅, les conditions dimensionnelles à respecter pour obtenir un temps de chauffage des pièces assurant une soudure de bonne qualité seront :

$0 \le d \le (0,03 . ∅) + 8$
$0 \le h_1 \le (0,03 . ∅) + 8$ et
$(0,01 . ∅) + 0,7 \le h_2 \le (0,06 . ∅) + 2,8$

d, $h_1$, et ∅ étant exprimés en mm.

Et si l'on veut introduire comme paramètre l'épaisseur e définit ci-avant en tenant compte des résultats des essais qui ont été menés, les conditions dimensionnelles à respecter simultanément deviendront alors, en ce qui concerne la pièce de raccordement utilisée :

$$\begin{cases} 0 < d \\ 0,83\ e - 2 \le d < 0,83\ e \\ 1,14\ e - 1 \le h_2 < 1,14e + 1,5 \\ 0 \le h_2 \\ 0,7\ e - 1 \le h_1 < 0,7\ e + 0,5 \\ 0 \le h_1 \end{cases}$$

(d, $h_2$, $h_1$ et e étant toujours exprimés en mm).

Bien entendu, si la cavité était dépourvue d'épaulement, la condition portant sur $h_2$ n'aurait pas lieu d'être (cf. figure 2 où l'on a représenté une cavité 9 cyclindrique à section circulaire constante).

Figure 4, on a représenté une autre variante de réalisation dans laquelle la cavité se présente sous la forme de deux cylindres à section circulaire de diamètre respectifs d et D réunis par un tronc de cône dont la petite base est située à la distance $h_2$ du plan 15 de la résistance 5.

Il est clair que de nombreuses autres formes pourraient être envisagées pour les cavités, sous réserve que les caractéristiques dimensionnelles sus-mentionnées soient respectées le nombre de cavités et de capteurs étant fonction de l'application choisie.

Egalement, l'invention est applicable à des pièces de raccordement autres que des manchons, telles par exemple que des prises de branchement ayant localement la forme d'une selle venant chevaucher la surface extérieure d'un tube pour son raccordement avec un autre tube disposé transversalement.

Pour la clarté de la description sont présentés ci-après deux exemples d'essais qui ont été menés en vue du soudage d'un tube et d'un manchon comportant une cavité telle que celle illustrée figure 3 et un bobinage électrique pour le chauffage des pièces.

| | Unités | Exemple 1 | Exemple 2 |
|---|---|---|---|
| Diametre moyen de l'orifice du manchon ($\emptyset$) | mm | 111,0 | 169,7 |
| Diametre du fil métallique constituant le bobinage | mm | 1,20 | 1,30 |
| Nature du bobinage | | Cu Ni 6 | Cu Ni 6 |
| Résistivité électrique du bobinage à 23°C | $\Omega\,m$ | $9,9 \times 10^{-8}$ | $9,9 \times 10^{-8}$ |
| Coefficient de température du bobinage ($\alpha$) (1) | $K^{-1}$ | $700 \times 10^{-6}$ | $700 \times 10^{-6}$ |
| Nombre de spires | | 14,75 | 11,75 |
| Pas d'enroulement | mm | 3,8 | 5,25 |
| Epaisseur de plastique entre le bobinage et l'interface de soudage (1a) | mm | 0,55 | 0,75 |
| Résistance électrique du bobinage à 23°C | $\Omega$ | 1,0 | 1,02 |
| Tension électrique de chauffage | V | 39 | 39 |
| Temps de chauffage mesuré | seconde | 200 | 350 |

6

| | | | |
|---|---|---|---|
| d | mm | 2,0 | 3,0 |
| $h_1$ | mm | 2,25 | 3,0 |
| $h_2$ | mm | 4,75 | 6,0 |
| Distance entre le fond de la cavité et le capteur | mm | 9,70 | 9,45 |
| e | mm | 3,9 | 4,975 |

(1) Ce coefficient traduit la variation de résistivité $\rho$ du bobinage en fonction de la température, suivant la relation :

$$\rho = \rho_0 \, ( \, 1 + \alpha \, ( \, T - T_0 ) )$$

où $\rho$ est la résistivité à la température T

$\rho_0$ est la résistivité à la température de référence $T_0$ ( $T_0 = 23°C$ )

Ce coefficient dépend directement de la nature de la résistance.

## Revendications

**1.** Dispositif pour détecter, au cours de son chauffage, des variations dans l'état physique d'une matière plastique thermofusible, ce dispositif comprenant :
- une pièce (1) de raccordement prévue pour être soudée autour d'au moins une autre pièce (3, 4) tubulaire en matière plastique thermofusible, lesdites pièces présentant des surfaces respectivement intérieure (1a) et extérieure par lesquelles elles sont mutuellement reliées au cours du soudage, au moins une cavité (9, 10) au sein de laquelle la matière ramollie est susceptible de pénétrer étant ménagée dans ladite pièce de raccordement (1), cette cavité s'étendant suivant un axe sensiblement radial à la pièce tubulaire (3, 4) et à ladite pièce de raccordement, en se terminant par une paroi de fond (11) adjacente à ladite surface intérieure (1a) de la pièce de raccordement,
- une résistance électrique (5) de chauffage noyée dans la pièce de raccordement (1) entre sadite surface intérieure (1a) et ladite cavité (9, 10), à une distance radiale minimum donnée $h_1$ de ladite paroi de fond (11) de la cavité, ladite résistance étant connectable à une source électrique pour faire fondre ladite matière thermofusible sur une épaisseur radiale prédéterminée de matière fondue en vue du soudage entre elles desdites pièces (1 ; 3, 4),
- et au moins un capteur (7, 8) disposé dans ladite cavité (9, 10) pour y capter des variations d'état physique de la matière,
le dispositif étant caractérisé en ce que ladite distance radiale minimum donnée $h_1$ et le dimensionnement $\underline{d}$ en section, suivant un plan sensiblement perpendiculaire à son axe, de ladite cavité (9, 10) à proximité de sa paroi de fond (11), sont chacun sélectionnés pour être inférieurs ou égaux à l'épaisseur radiale prédéterminée de matière fondue $\underline{e}$ mesurée depuis ladite résistance (5) vers la surface extérieure de ladite pièce de raccordement.

**2.** Dispositif selon la revendication 1, caractérisé en ce que ladite distance radiale minimum $h_1$ a une valeur sensiblement égale à celle de l'épaisseur radiale prédéterminée de matière qui fond lors du chauffage desdites pièces (1 ; 3, 4) avant qu'une pression de dilatation induite par le chauffage provoque la pénétration de ladite matière fondue dans la cavité (9, 10) sur une épaisseur radiale $\underline{e}$ - $h_1$.

**3.** Dispositif selon la revendication 1 ou la revendication 2, caractérisé en ce que la cavité (9 ) présente un épaulement (12) séparé de la résistance (5) d'une distance $h_2$ inférieure ou égale au double de ladite épaisseur radiale prédéterminée e de matière fondue, mesurée depuis la résistance (5) vers la surface extérieure de la pièce de raccordement (1).

**4.** Dispositif selon l'une des revendications 1 à 3, caractérisé en ce que dans le cas où la pièce (1) de raccordement se présente sous la forme d'un manchon comportant un orifice (2) de section circulaire avec un diamètre (∅), propre à recevoir intérieurement ladite pièce (3, 4) tubulaire, et où ladite cavité (9, 10) présente une section circulaire ou sensiblement circulaire, les relations suivantes sont vérifiées :

$$0 \leq d \leq (0,03 . \emptyset ) + 8$$
$$0 \leq h_1 \leq (0,03 . \emptyset ) + 8$$

les valeurs de ∅, d et $h_1$ étant exprimées en millimètre.

**5.** Dispositif selon la revendication 3, caractérisé en ce que dans le cas où la pièce (1) de raccordement se présente sous la forme d'un manchon comportant un orifice (2) à section circulaire de diamètre (∅) propre à recevoir intérieurement au moins ladite pièce (3, 4) tubulaire, la relation suivante est vérifiée ;

$$(0,01 . \emptyset) + 0,7 \leq h_2 \leq (0,06 . \emptyset) + 2,8$$

Les valeurs de ∅ et $h_2$ étant exprimées en millimètre.

**6.** Dispositif selon l'une quelconque des revendications 3 à 5, caractérisé en ce qu'il vérifie les relations suivantes :

$$0 \leq d$$
$$0,83 e - 2 \leq d < 0,83 e$$
$$1,14 e - 1 \leq h_2 < 1,14 e + 1,5$$
$$0 \leq h_2$$
$$0,7 e - 1 \leq h_1 < 0,7 e + 0,5$$
$$0 \leq h_1$$

les valeurs de d, $h_1$, $h_2$, et e étant exprimées en millimètre.

**Claims**

**1.** Device so detecting, during its heating, variations in the physical state of a thermosetting plastics material, this device comprising:
- a connection part (1) provided so as to be welded about at least one other, tubular, part (3, 4) made of thermosetting plastics material, said parts having respective internal (1a) and external surfaces via which they are mutually connected during the welding process, at least one cavity (9, 10) which the softened material can penetrate being provided in the connection part (1), this cavity extending along an axis which is substantially radial to the tubular part (3, 4) and to the connection part, terminating in a base wall (11) adjacent the internal surface (1a) of the connection part;
- an electrical heating resistor (5) embedded in the connection part (1) between its internal surface (1a) and the cavity (9, 10), at a given minimum radial distance $h_1$ from the base wall (11) of the cavity, it being possible for the resistor to be connected to an electrical source in order to cause the thermosetting material to melt over a predetermined radial thickness of molten material for the purpose of welding between the parts (1; 3, 4);
- and at least one sensor (7, 8) disposed in the cavity (9, 10) in order to detect there the variations in the physical state of the material; the device being characterised in that the given minimum radial distance $h_1$ and the dimensioning d in section of the cavity (9, 10), along a plane substantially perpendicular to its axis, in the vicinity of its base wall (11) are each selected such that they are less than or equal to the predetermined radial thickness of molten material e measured from the resistor (5) to the outer surface of the connection part.

**2.** Device according to Claim 1, characterised in that the minimum radial distance $h_1$ has a value which is substantially equal to that of the predetermined radial thickness of material which melts during the heating of the parts (1; 3, 4) before an expansion pressure induced by the heating process causes the molten material to penetrate the cavity (9, 10) over a radial thickness $\underline{e}$ - $h_1$.

**3.** Device according to Claim 1 or Claim 2, characterised in that the cavity (9) has a shoulder (12) separated from the resistor (5) by a distance $h_2$ which is less than or equal to twice the predetermined radial thickness $\underline{e}$ of molten material, measured from the resistor (5) to the outer surface of the connection part (1).

**4.** Device according to any one of Claims 1 to 3, characterised in that, in the event of the connection part (1) being in the form of a sleeve having an aperture (2) having a circular cross-section with a diameter (∅), which can accommodate internally the tubular part (3, 4), and of the cavity (9, 10) having a circular or substantially circular cross-section, the following relations are established:

$$0 \leq d \leq (0.03 \, \emptyset) + 8$$
$$0 \leq h_1 \leq (0.03 \, \emptyset) + 8$$

the values of ∅, d and $h_1$ being expressed in millimetres.

**5.** Device according to Claim 3, characterised in that, in the event of the connection part (1) being in the form of a sleeve having an aperture (2) having a circular cross-section with a diameter (∅), which can accommodate internally at least the tubular part (3, 4), the following relation is established:

$$(0.01 \, \emptyset) + 0.7 \leq h_2 \leq (0.06 \, \emptyset) + 2.8$$

the values of ∅ and $h_2$ being expressed in millimetres.

**6.** Device according to any one of Claims 3 to 5, characterised in that it establishes the following relations:

$$0 \leq d$$
$$0.83 \, e - 2 \leq d < 0.83 \, e$$
$$1.14 \, e - 1 \leq h_2 < 1.14 \, e + 1.5$$
$$0 \leq h_2$$
$$0.7 \, e - 1 \leq h_1 < 0.7 \, e + 0.5$$
$$0 \leq h_1$$

the values of $\underline{d}$, $h_1$, $h_2$ and $\underline{e}$ being expressed in millimetres.

**Patentansprüche**

**1.** Vorrichtung zum Erfassen von physikalischen Zustandsänderungen eines wärmeschmelzbaren Kunststoffes im Laufe seines Erhitzens, wobei die Vorrichtung aufweist:
- ein Verbindungsstück (1), das dazu vorgesehen ist, um mindestens ein anderes röhrenförmiges Werkstück (3, 4) aus wärmeschmelzbarem Kunststoff herum geschweißt zu werden, wobei die Werkstücke innere Oberflächen (1a) bzw. äußere Oberflächen aufweisen, durch weiche sie gegenseitig im Laufe des Schweißens verbunden werden und mindestens einen Hohlraum (9, 10), in weichen einzudringen der erweichte Stoff fähig ist, wobei der Hohlraum in dem Verbindungsstück (1) ausgespart ist, sich entlang einer zu dem röhrenförmigen Werkstück (3, 4) und dem Verbindungsstück im wesentlichen radialen Achse hin erstreckt, und in einer Bodenwand (11), die an die innere Obenfläche (1a) des Verbindungsstückes angrenzt, endet,
- einen elektrischen Heizwiderstand (5), der in dem Verbindungsstück (1) zwischen seiner inneren Oberfläche (1a) und dem Hohlraum (9, 10) um einen radialen Minimalabstand $h_1$ von der Bodenwand (11) des Hohlraumes versenkt ist, wobei der Widerstand mit einer elektrischen Quelle in Verbindung bringbar ist, um den wärmeschmelzbaren Stoff auf eine radiale, vorbestimmte Dicke des geschmolzenen Stoffes im Hinblick auf das Schmelzen der Werkstücke (1; 3, 4) untereinander schmelzen zu lassen,

- und mindestens einen Meßfühler (7, 8), der in dem Hohlraum (9, 10) angeordnet ist, um hier die physikalischen Zustandsänderungen des Stoffes zu messen, dadurch gekennzeichnet, daß der radiale Minimalabstand $h_1$ und die Querschnittsbemessung $\underline{d}$, einer Ebene im wesentlichen senkrecht zu der Achse von dem Hohlraum (9, 10) in die Nähe der Bodenwand (11) folgend, jeweils so ausgesucht sind, daß sie kleiner oder gleich der radialen vorbestimmten Dicke des geschmolzenen Stoffes $\underline{e}$ sind, die vom Widerstand (5) zur äußeren Oberfläche des Verbindungsstückes gemessen ist.

2.  Vorrichtung nach Anspruch 1, dadurch gekennzeichnet, daß der radiale Minimalabstand $h_1$ einen Wert hat, der im wesentlichen gleich dem der radialen vorbestimmten Dicke des Stoffes ist, der während des Erhitzens der Stücke (1; 3, 4) schmilzt, bevor ein durch das Erhitzen induzierter Wärmedehnungsdruck das Eindringen des geschmolzenen Stoffes in den Hohlraum (9, 10) auf eine radiale Dicke $\underline{e}$ - $h_1$ hervorruft.

3.  Vorrichtung nach Anspruch 1 oder nach Anspruch 2, dadurch gekennzeichnet, daß der Hohlraum (9) eine Schulter (12) aufweist, die um einen Abstand $h_2$, der kleiner oder gleich dem Doppelten der radialen vorbestimmten Dicke $\underline{e}$ des geschmolzenen Stoffes ist, von dem Widerstand (5) getrennt ist, welcher von dem Widerstand (5) zur äußeren Oberfläche des Verbindungsstückes (1) gemessen wird.

4.  Vorrichtung nach einem der Ansprüche 1 bis 3, dadurch gekennzeichnet, daß in dem Fall, wo das Verbindungsstück (1) die Form einer Muffe hat, die eine Öffnung (2) von kreisrundem Querschnitt mit einem Durchmesser (⌀) aufweist, die geeignet ist, innen das röhrenförmige Werkstück (3, 4) aufzunehmen, und wo der Hohlraum (9, 10) einen kreisrunden oder im wesentlichen kreisrunden Querschnitt hat, werden die folgenden Beziehungen gelten:

$$0 \leq d \leq (0{,}03 \,.\, \varnothing) + 8$$
$$0 \leq h_1 \leq (0{,}03 \,.\, \varnothing) + 8$$

wobei die Werte des ⌀, $\underline{d}$ und $h_1$ in Millimetern ausgedrückt sind.

5.  Vorrichtung nach Anspruch 3, dadurch gekennzeichnet, daß in dem Fall, wo das Verbindungsstück (1) die Form einer Muffe aufweist, die eine Öffnung (2) mit kreisförmigem Durchmesser (⌀) aufweist, die geeignet ist, innen mindestens das röhrenförmige Werkstück (3, 4) aufzunehmen, die folgende Beziehung gilt:

$$(0{,}01 \,.\, \varnothing) + 0{,}7 \leq h_2 \leq (0{,}06 \,.\, \varnothing) + 2{,}8$$

wobei die Werte des ⌀ und $h_2$ in Millimetern ausgedrückt sind.

6.  Vorrichtung nach einem der Ansprüche 3 bis 5, dadurch gekennzeichnet, daß die folgenden Beziehungen gelten:

$$0 \leq d$$
$$0{,}83\,e - 2 \leq d < 0{,}83\,e$$
$$1{,}14\,e - 1 \leq h_2 < 1{,}14\,e + 1{,}5$$
$$0 \leq h_2$$
$$0{,}7\,e - 1 \leq h_1 < 0{,}7\,e + 0{,}5$$
$$0 \leq h_1$$

wobei die Werte von $\underline{d}$, $h_1$, $h_2$ und $\underline{e}$ in Millimetern ausgedrückt sind.

FIG_1

FIG. 2

FIG. 3

FIG. 4